# EUROPEAN PATENT APPLICATION

(11) **EP 2 372 947 A1**
(43) Date of publication of application: **05.10.2011**
(21) Application number: 10158333.4
(22) Date of filing: 30.03.2010
(51) Int. Cl.: H04L 9/32

(54) **Secure and traceable digital transmission method and envelope**

(71) Applicant: Evidencecube, 4350 Remicourt (BE)
(72) Inventor: BOUVET, Hervé, 1180, UCCLE (BE); LERUTH, Michael, 4350, REMICOURT (BE)
(74) Representative: Luys, Marie-José A.H.

(57) **Abstract**

Method for transmitting a document 5 from a first party 1 to a second party 3, comprising the steps of :
generating a digital digest of said document 5, un-encrypted, using a hash function;
encrypting said document 5;
generating a digital digest of the encrypted document 5 using a hash function;
creating a digital envelope 4, comprising at least the encrypted document and the digital digests of the document 5, un-encrypted, and of the document 5, encrypted; and
digitally signing said digital envelope 4 using a hash function and an asymmetric encryption algorithm with a private encryption key and a public decryption key of the first party 1;
electronically transmitting said digitally signed envelope 4 from the first party 1 to a third party 3, and
electronically transmitting said digitally signed envelope 4 from the third party 3 to the second party 2.

## Description

The present invention relates to a method for transmitting a digital document from a first party to a second party, as well as to a digital envelope comprising said document.

Electronic communications, such as, for example, electronic mail using the Internet Protocol, by their speed, low cost, and ability to transmit large amounts of information, have gained an ever-increasing role in business and other transactions. However, as such communications are generally transmitted over public networks, such as the Internet, they may pass through a plurality of intermediaries, any one of which can potentially intercept them, and/or modify their content. Other problems linked to such electronic communications are those of authenticating the sender and the receiver, preventing repudiation of the communication by the sender and certifying the reception of the communication by the receiver in a non-repudiable manner.

A number of different proposals have been disclosed for solving these drawbacks. For example, various cryptographic methods, such as PGP, have been proposed for encrypting digital documents. Typically, these apply asymmetric encryption algorithms, with a public encryption key, and a private decryption key known only by the receiving party.

In order to ensure also the integrity of the communications, several methods have been proposed, mostly involving the use of hash functions, which generate a short digital digest of the content of the communication. Such hash functions are irreversible, so that the content of the communication can't be retrieved from the digest. However, it can be matched to it in an integrity check.

At the same time, the concept of the digital signature has also been developed for authenticating the identity of the sender or receiver of a document. To digitally sign a dataset, digital digest of this dataset, generated using a hash function, is encrypted using an asymmetric encryption algorithm with a private encryption key and a public decryption key, so as to create a digital signature. The public key associated with the private key and with the identity of the signing party can then be used in order to decrypt the dataset and match it with the un-encrypted digest, so as to verify the signature. Apart from not requiring the original content of the document to verify the signature, this also has the advantage of reducing the size of the data to be encrypted to generate the digital signature, therefore also reducing the data processing requirements.

Various methods have also been proposed to prevent repudiation of origin or delivery. Some of these methods were disclosed by Robert H. Deng, Li Gong, Aurel A. Lazar and Weiguo Wang in "Practical Protocols For Certified Electronic Mail", Journal of Network and Systems Management, Volume 4, Number 3, September 1996. While one of the disclosed methods also addresses the issue of ensuring confidentiality, it does not explicitly address that of integrity.

US Patent Application Publication US 2007/0174406 A1 discloses a method for ensuring the integrity and origin of communications by attaching to them a digitally signed digest of their content. However, this prior art document does not appear to address the issues of confidentiality or non-repudiation of receipt.

US Patent Application Publication US 2009/0259840 A1 discloses a similar method for ensuring the integrity of communications by attaching to them a digest of their content signed by a third party, or "Electronic Post Mark". The third party is also meant to ensure the non-repudiation of origin and destination, but it is not clearly disclosed how the sender and recipient are meant to reliably identify themselves to the third party. Moreover, the issue of confidentiality is not addressed.

US Patent US 6,145,079 discloses another method for ensuring the secure transmission of an encrypted message and preventing repudiation of receipt or of the content of the message. However, in this method, the delivery receipt is only generated after the message is decrypted. The receiver may thus be able to repudiate receipt by not opening the message.

International patent application WO 02/30041 A2 discloses another method for ensuring the secure transmission of an encrypted message and preventing repudiation. However, in this method, the log of the message exchanges is kept by a third party, and the proofs of transmission and delivery may be lost once this third party is no longer accessible. It is also necessary to contact the third party to receive the key for decrypting the message.

European patent application EP 1 300 980 A1 discloses another method for ensuring the secure transmission of an encrypted message and preventing repudiation of receipt. However, it does not address the issue of preventing repudiation by the sender.

A first object of the present invention is to provide a method for transmitting a document from a first party to a second party, wherein repudiation by either one of the parties can be prevented without compromising the confidentiality of the document or having to rely on a depository.

To this object, in an embodiment of the present invention, a method for transmitting a document from a first party to a second party comprises the steps of:
generating a digital digest of said document, un-encrypted, using a hash function;
encrypting said document;
generating a digital digest of the encrypted document using a hash function;
creating a digital envelope, comprising at least the digital digests of the un-encrypted document and of the encrypted document, the encrypted document; and
digitally signing said digital envelope using a hash function and an asymmetric encryption algorithm with a private encryption key and a public decryption key of the first party;
electronically transmitting said digitally signed envelope from the first party to a third party, and
electronically said digitally signed envelope from the third party to the second party.

The encryption of the document ensures its confidentiality, and the digital signature of the envelope provides a means for later confirming the identity of the first party and the entire content of the envelope. Since the envelope also contains a digital digest of the encrypted document, it will also be possible to verify that the encrypted document has not been replaced by matching it with its digital digest, and this without requiring the decryption of the document. Since, however, the digital envelope also contains a digital digest of the un-encrypted document, it will also be possible to verify the un-encrypted document separately. Each element of the envelope is thus linked to each other and directly or indirectly verifiable to prevent modification or repudiation of the envelope, and this without breaching the document confidentiality or having to rely on a depository or the third party for this verification.

Advantageously, each step in the transmission of the envelope can be verifiably tracked by digitally signed notifications or receipts sent by the third party to the first and/or second parties. Such notifications and receipts may comprise a digital digest of the envelope with the digital digests of the encrypted and unencrypted document. One such notification may be sent by the third party to the first and second parties upon receipt of the envelope by the third party and before it is then transmitted to the second party. Another such notification may be sent by the third party to the first and/or second parties upon successful transmission of the envelope from the third party to the second party.

Even more advantageously, the transmission of the envelope from the third party to the second party may be conditioned to the transmission to the third party of an acceptation receipt for the envelope digitally signed by the second party. In order to provide means of verification, such an acceptation receipt may also comprise, like the abovementioned notifications, a digital digest of the envelope and the digital digests of the encrypted and unencrypted document. This acceptation receipt (or, alternatively, a digitally signed rejection receipt, if the second party has refused to receive the envelope) may then be transmitted to the first party.

Advantageously, prior to being encrypted, the document may also be itself digitally signed. In particular, when the envelope comprises several encrypted documents, and one or several of them have had to be authorised by one or several parties, this allows each one of these parties to be linked to each corresponding document.

Advantageously, in order to keep a verifiable record not just of the content and parties to each step in the transmission of the document, but also of the time and date at which each step was performed, each digital signature may be time stamped, for example by a certified authority.

Advantageously, in order to be able to track the certification track of each digital signature up to its root certificate, each digital signature may also comprise a complete set of certification values and/or a complete set of revocation information values.

Advantageously, in order to link the envelope and/or the notification or receipt to the identities of the first and second parties, they may also comprise an identifier of the first party and/or the second party.

Another object of the present invention is to provide a method for transmitting an encrypted document from a first party to several second parties, wherein each one of these recipients will only be able to decrypt the document with his private key. To this object, in an embodiment of the present embodiment, the document to be transmitted from a first party to a second party is encrypted using an encryption algorithm with a symmetric encryption and decryption key, and said symmetric key is encrypted using an asymmetric encryption algorithm with a public encryption key and a private decryption key of the second party, wherein said encrypted document will be transmitted to the second party with the encrypted symmetric key. Apart from the confidentiality, this also has the advantage of linking the message to the identity of the recipient through his public-private key pair, if the key pair for authentication and confidentiality is the same.

The present invention also relates to a digital envelope and notification or receipt as claimed, to a computer program product comprising instructions for carrying out a method according to the invention, and to a data storage medium comprising such a digital envelope, notification and/or computer program product.

By "data storage medium", it is meant any computer-readable support containing digital data, including, but not restricted to, a solid state memory such as a random access memory, a flash memory, or a read-only memory, but also a magnetic data storage medium such as a hard disk drive or a magnetic tape, an optical data storage medium such as an optical disk, etc.

It must be understood that each step in the claimed method is preferably performed using an electronic data processor, and in particular a programmable electronic data processor.

These and other objects of the present invention will become more readily apparent upon reading the following detailed description and upon reference to the attached drawings in which:
Figure 1 is a flowchart representing schematically a transmission method according to an embodiment of the invention;
Figure 2 is a schematic representation of a recipient identity confirmation or invalidity notification in an embodiment of the invention;
Figure 3 is a schematic representation of a digital envelope according to an embodiment of the invention; and
Figure 4 is a schematic representation of a notification or receipt according to an embodiment of the invention.

In a preferred embodiment of the invention, the identities of a first party 1 and a second party 2 are registered by a transaction platform (for example a web platform) acting as an intermediate third party 3 in communications between the first party 1 and the second party 2. Each party has a confidentiality method and a non-repudiation method.

The confidentiality method of a party is the asymmetric encryption method to be used to encrypt confidential data directed to this party. This encryption method will have a public encryption key associated with the identity of this party, and a private decryption key known only to this party.

The non-repudiation method of a party is the hashing and asymmetric encryption method used by that party to digitally sign a dataset. This other encryption method will have a private encryption key known only to this party, and a public decryption key associated with the identity of this party.

The authentication of the public keys for both the confidentiality and the non-repudiation methods of each party may be ensured by a Public Key Infrastructure, such as that provided by X.509 certificates. However, alternative public key authentication methods could also be applied, such as the Web of Trust.

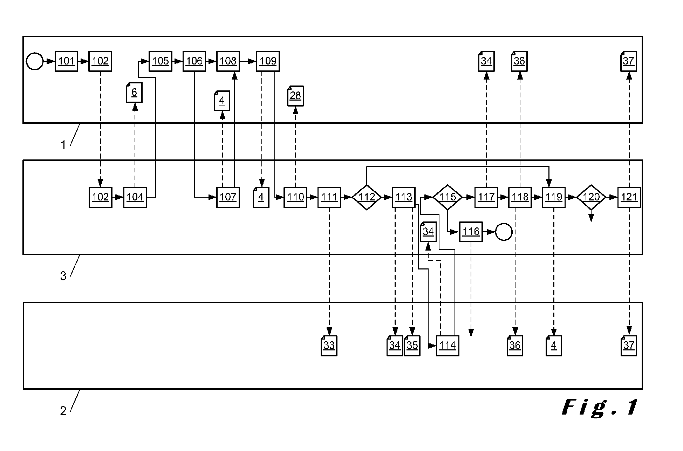

As shown in Fig. 1, when the first party 1 wishes to send to the second party a digital envelope 4 containing one or more encrypted documents 5, it will, in step 101 enter various information about the envelope, such as for example the subject of the envelope, a short description, whether the first party offers a pre-paid response to the second party, or whether delivery requires an acceptation receipt. In the latter case, it may also include an expiration date for the envelope, wherein the envelope may only be delivered to the second party 2 if said second party 2 does not countersign the acceptation receipt before said expiration date. In step 102, the first party 1 also identifies the second party (or parties) 2 to which the envelope 4 should be delivered.

These identities are transmitted to the third party 3, which in step 103 verifies for each one of them whether they are registered in the platform, and whether their confidentiality and non-repudiation methods and public keys are still correct. The third party 3 then sends, in step 104, a recipient identity confirmation or invalidity notification 6 to the first party 1, indicating whether the identity of the second party 2 has been confirmed or invalidated.

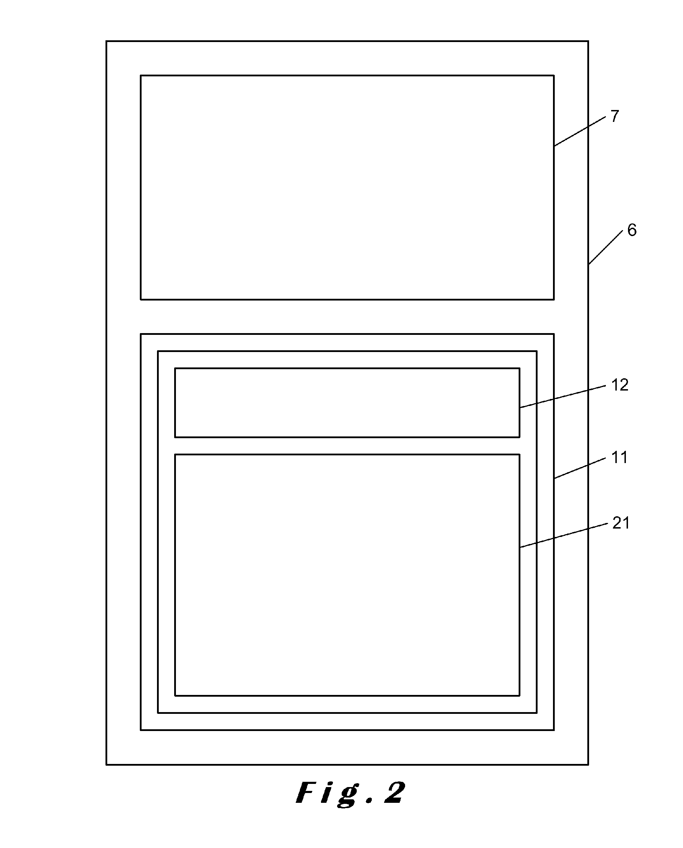

An example of the form which this recipient identity confirmation or invalidity notification 6 may take is schematically represented in Fig. 2. Each recipient identity confirmation or invalidity notification 6 would comprise a header 7 including a unique identifier, a time stamp, and an identifier of the third party 3, and a body 11 including a description 12 indicating whether the recipient identity is confirmed or invalidated, recipient details 21 including attributes identifying the second party 2, such as, for example, name, nickname, e-mail address, unique identifier, affiliation, etc., and attributes identifying the confidentiality and non-repudiation methods of the second party 2. If the confidentiality or the non-repudiation method is based on a public-key infrastructure certificate, these attributes may comprise an identifier of the type of certificate (for instance, that it is an X.509 certificate), the value of the certificate, and the value of the Certificate Revocation List (CRL) associated to that certificate. Both values may be expressed in base64.

Turning back to the flow chart of Fig. 1, if the recipient identity has been confirmed, the first party 1 can then, in step 105, enter the document or documents 5 to be sent in the digital envelope 4. These documents 5 are encrypted using the confidentiality method of the second party 2. They may be uploaded by the first party 1, or identified by the first party 1 from among the documents stored in a remote repository, possibly through the platform of the third party 3. Each document 5 receives a unique identifier, and may also be complemented with additional data relating to, for instance, the author of the document. Each document 5 may be itself digitally signed by one or more parties, using the individual non-repudiation methods associated to each one of the signing parties.

In step 106, the first party 1 generates, with a digital data processor applying a hash function, a digital digest 16 of each document 5, before encrypting each document 5 with a digital data processor applying an encryption algorithm with a symmetric encryption and decryption key, which is then itself encrypted with a digital data processor using a confidentiality method associated to the second party 2. The first party 1 then also generates a digital digest 17 of each document 5 after encryption.

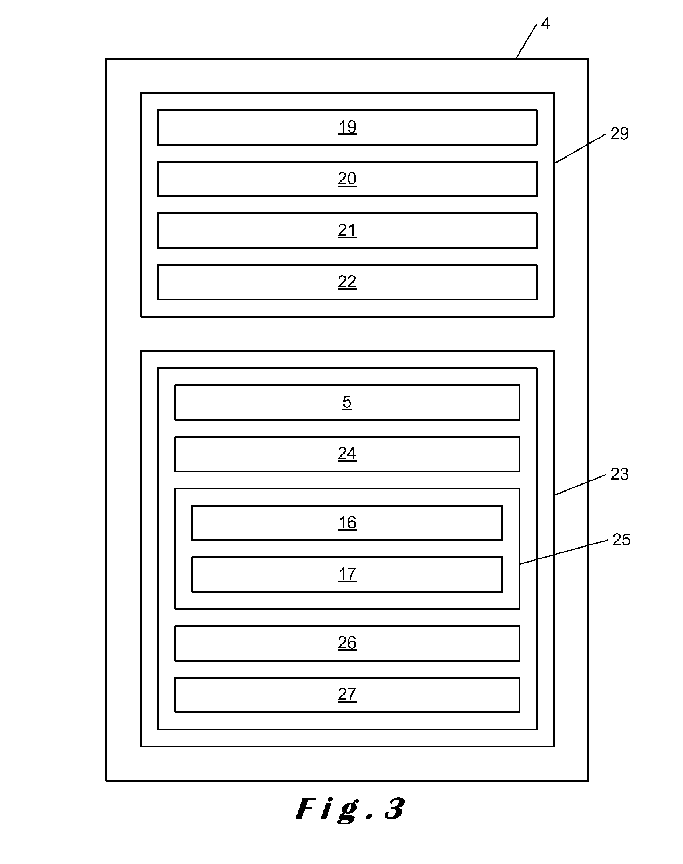

In step 107, the third party 3 generates a digital envelope 4 with a unique identifier and transmits this digital envelope 4 to the first party 1. The first party 1 can then complete the digital envelope 4 in step 108. An example of this completed digital envelope 4 is schematically illustrated in Fig. 3. This digital envelope 4 comprises a header 18 and a body 23. The header 18 may comprising envelope details 19, sender details 20, the abovementioned recipient details 21, and exchange session details 22. The body 23 may comprise each encrypted document 5, accompanied by document information 24, document digest information 25, eventual document signature information 26, and document confidentiality information 27.

The envelope details 19 may include the abovementioned unique identifier of the digital envelope 4, a time stamp, and the information about the envelope entered by the first party 1 in step 101. The sender details 20 may include attributes identifying the first party 1, such as, for example, name, nickname, e-mail address, unique identifier, affiliation, etc. The exchange session details 22 may include attributes of the exchange session within which the digital envelope 4 was created, as well as attributes identifying the initiator of the exchange session.

The document information 24 for each document 5 may comprise a file name, a content descriptor including a unique identifier, and said additional data identifying, for example, its author.

The document digest information 25 comprises the digital digests 16 and 17 of, respectively, the unencrypted and encrypted document 5. They may each be expressed by their value in base64, accompanied by a descriptor of the hash algorithm used to generate each digest.

The document confidentiality information 27 will comprise the size of the un-encrypted symmetric key used to encrypt each document 5, a descriptor of the symmetric encryption algorithm used to encrypt the document 5, and said symmetric key, encrypted with the confidentiality method of the second party 2.

If an encrypted document 5 in the digital envelope 4 is digitally signed individually, for each digital signature on the document 5 the following document signature information 26 is also included in the body 23 of the envelope: the value of the signature in base64, the signature level, the value of the digital digest 16 of the unencrypted document in base64, a descriptor of the algorithm used to generate that digest 16, type of non-repudiation method used, and, if said non-repudiation method is based on a PKI certificate, such as an X.509 certificate, the value of that certificate in base64, as well as those of the entire certificate value and revocation information value chains. The revocation information value chains may be expressed as CRLs or as OCSP responses.

Each digital signature on an individual document 5 may moreover also receive a digitally signed time stamp. In that case, the document signature information 25 may also include, besides the time stamp itself and its signature, the type of non-repudiation method used for signing the time stamp, and, if said non-repudiation method is based on a PKI certificate, such as an X.509 certificate, the value of that certificate in base64, as well as those of its entire certificate value and revocation information value chains. The revocation reference chains may be expressed as CRLs or as OCSP responses.

After the digital envelope 4 is completed, the first party 1 will sign it and electronically transmit it to the third party 3 in step 109. In response to the envelope 4, the third party 3 will then, in step 110, verify the digital signature on the envelope 4 and, eventually, on the individual document or documents 5 in the envelope 4 and identity of the first party 1 and other eventual signatories of the individual document or documents 5, generate a notification in the form of a sending receipt 28, digitally sign it, and electronically transmit it back to the first party 1.

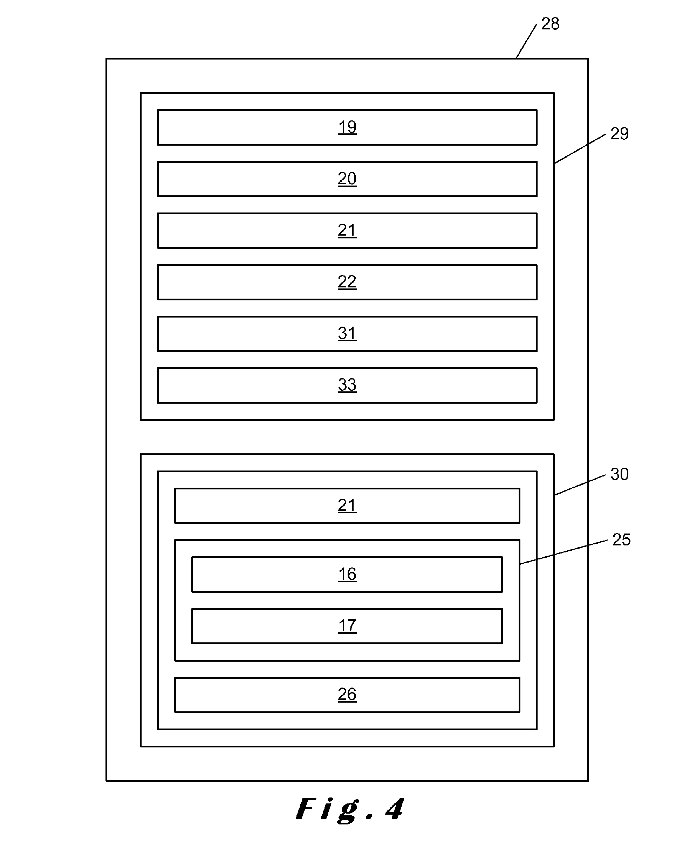

The structure of the sending receipt 28 is schematically illustrated in Fig. 4. Such a notification comprises a header 29 and a body 30. Like the header 18 of the envelope, the header 29 also comprises the abovementioned envelope details 19, sender details 20, recipient details 21, and exchange session details 22. The header 29 will also comprise a description 31 and digital digest information 32 comprising the value, preferably in base64, of a digital digest of the envelope 4 generated with a digital data processor applying a hash algorithm, and a descriptor of said hash algorithm.

In the illustrated structure, the body 30 will comprise, for each document 5 in the envelope 4, the abovementioned document information 24, document digest information 25, and eventual document signature information 26. However, it will not comprise the encrypted document 5 itself or the document confidentiality information 27.

In the sending receipt 28, the description 31 will confirm to the first party 1 that the envelope 4 has been received by the third party 3 at a specific time and date, and that it will be electronically transmitted as constituted to the second party 2, or, if the first party 1 has requested that the second party 2 signs an acceptation receipt before it receives the envelope 4, that a sending notification will be sent to the second party 2 and the envelope will be forwarded to the second party once it signs an acceptation receipt and sends it back to the third party 3.

In step 111, the third party 3 will generate a sending notification 33, digitally sign it, and electronically transmit it to the second party. The sending notification 33 will also have the structure illustrated in Fig. 4. In the description 31 of the sending notification 28, the third party 3 will however receive information about the scope of this sending notification 33, and instructions to follow to receive the envelope 4.

The third party 3 will then check, in step 112, whether the first party 1 has requested explicit acceptation of the envelope 4 by the second party 2. If this is the case, the third party 3 will generate two further notifications in the form of an acceptation receipt 34 and a rejection receipt 35, digitally sign them and electronically transmit them to the second party 2 in step 113. Both the acceptation receipt 34 and the rejection receipt 35 will have the same structure as the sending receipt 28 illustrated in Fig. 4. However, in the acceptation receipt 34, the description 31 indicates that the second party 2 accepts the envelope 4, and in the rejection receipt 35, the description 31 indicates that the second party 2 rejects the envelope 4.

In step 114, the second party 2, deciding to accept the envelope 4, digitally countersigns the acceptation receipt 34, and sends it back to the third party 3. In the subsequent step 115, the third party 3 verifies the digital signature of the second party 2 on the acceptation receipt 34. If this digital signature cannot be validly matched to the content of the envelope 4 and the identity of the second party 2, it will notify the second party 2 in step 116, and not deliver the envelope 4. If this digital signature can however be validly matched to the identity of the second party 2, the third party 3 will then transmit the digitally countersigned acceptation receipt 34 to the first party in step 117. Then, in step 118, it will generate and digitally sign an acceptation confirmation notification 36, and send it to both the first party 1 and the second party 2. This acceptation confirmation notification 36 will also have the same structure as the sending receipt 28 illustrated in Fig. 4. The description 31 of the acceptation confirmation notification 36 will confirm to both the first party 1 and the second party 2 that the third party 3 has received a valid acceptation from the second party 2 for the envelope 4 and should proceed to electronically transmit the envelope 4 to the second party 2 in step 119. It must be noted that, if the first party 1 did not request explicit acceptation of the envelope 4 in step 101, the third party 3 will go directly from step 113 to this step 119.

If the second party 2 had decided to reject the envelope 4 instead, it would have digitally countersigned the rejection receipt 35, which the third party 3, after verifying the signature of the second party 2, would have transmitted to the first party 1 to notify the first party 1 of the second party's rejection of the envelope 4. A rejection confirmation notification would then have been generated and signed by the third party 3, which would then transmit it to both the first party 1 and the second party 2. This rejection confirmation notification would also have the same structure as the sending receipt 28 illustrated in Fig. 4. However, the description 31 of the rejection confirmation notification will confirm to both the first party 1 and the second party 2 that the third party 3 has received a valid rejection from the second party 2 for the envelope 4 and will not transmit the envelope 4 to the second party 2.

After checking, in step 120, that the envelope 4 has been successfully transmitted to the second party 2, the third party 3 will then, in step 121, generate and digitally sign a delivery receipt 37, and send it to both the first party 1 and the second party 2. This delivery receipt 37 will also have the same structure as the sending receipt 28 illustrated in Fig. 4. The description 31 of the delivery receipt 37 will confirm to both the first party 1 and the second party 2 that the third party 3 has made the envelope 4 available to the second party 2.

As for the individual digital signatures on each document 5, a complete set of signature information data may also be annexed to each digital signature on the envelope 4 and the notifications and receipts 28,33,34,35,36, 36' and 37, preferably including the value of the signature in base64, the signature level, type of non-repudiation method used, and, if said non-repudiation method is based on a PKI certificate, such as an X.509 certificate, the value of that certificate in base64, as well as those of the entire certificate reference and revocation reference chains. The revocation reference chains may be expressed as CRLs or as OCSP responses. These digital signatures may also be time stamped, in which case the accompanying signature information data will also include, besides the time stamp itself and its signature, the type of non-repudiation method used for signing the time stamp, and, if said non-repudiation method is based on a PKI certificate, such as an X.509 certificate, the value of that certificate in base64, as well as those of its entire certificate value and revocation information value chains. The revocation information value chains may also be expressed as CRLs or as OCSP responses.

The digital envelope 4 and all the notifications and receipts 6, 28,33,34,35,36 and 37 will preferably be in XML format. In that case, each digital signature, with all the abovementioned signature information including the digitally signed timestamp, may be compliant with the CAdES standard, as described in the ETSI Technical Specification TS 101 703, or the XAdES standard, as described in the ETSI Technical Specification TS 101 903.

The various digitally signed and preferably time stamped notifications and receipts thus provide both the first party 1 and the second party 2 a fully traceable trail of the envelope's delivery or rejection, which can be matched with the envelope 4 itself without compromising the confidentiality of the encrypted document or documents 5 or having to rely on the third party 3 later for authentication.

The recipient identity notifications 6 thus indicates to the first party 1 whether the confidentiality and non-repudiation methods which it intends to apply correspond to the identity of the second party 2 and are valid and qualified, or not.

The sending receipt 28 confirms to the first party 1 that the envelope 4 has been received by the third party 3 at a specific time and date, and that it will be electronically transmitted as constituted to the second party 2, or, if the first party 1 has requested that the second party 2 signs an acceptation receipt before it receives the envelope 4, that a sending notification will be sent to the second party 2 and the envelope will be forwarded to the second party once it signs an acceptation receipt and sends it back to the third party 3.

The sending notification 33 confirms to the second party 2 that he has been notified about the envelope 4 at the time and date specified in the timestamp.

The acceptation receipt 34 and the rejection receipt 35 confirm to the second party 2 that he has been given the choice to accept or reject the envelope 4. The same acceptation receipt 34, countersigned by the second party 2, confirms to the first party 1 that the second party 2 has accepted the envelope 4, and that it should be delivered to him by the third party 3. The rejection receipt 35, countersigned by the second party 2, confirms to the first party 1 that the second party 2 has rejected the envelope 4, and that it will thus not be delivered to him by the third party 3.

The acceptation confirmation receipt 36 confirms to the first party 1 that the third party 3 has registered the acceptation of the envelope 4 by the second party 2 and delivered the envelope 4 to the second party 2, and to the second party 2 that its digital signature has been accepted and that the third party 3 guarantees that it will deliver the envelope 4 to it.

The rejection confirmation receipt 36' confirms to the first party 1 that the third party 3 has registered the rejection of the envelope 4 by the second party 2, and will not transmit the envelope 4 to the second party 2.

The delivery receipt 37 confirm to both the first party 1 and the second party 2 that the third party 3 has made the envelope 4 available to the second party 2.

Although the present invention has been described with reference to specific exemplary embodiments, it will be evident that various modifications and changes may be made to these embodiments without departing from the broader scope of the invention as set forth in the claims. Accordingly, the description and drawings are to be regarded in an illustrative sense rather than a restrictive sense.

## Claims

1. Method for transmitting a document (5) from a first party (1) to a second party (2), comprising the steps of :
generating a digital digest (16) of said document (5), un-encrypted, using a hash function;
encrypting said document (5);
generating a digital digest (17) of the encrypted document using a hash function;
creating a digital envelope (4), comprising the encrypted document and the digital digests (16,17) of the document, un-encrypted and encrypted; and
digitally signing said digital envelope (4) using a hash function and an asymmetric encryption algorithm with a private encryption key and a public decryption key of the first party (1);
electronically transmitting said digitally signed envelope (4) from the first party (1) to a third party (3), and
electronically transmitting said digitally signed envelope (4) from the third party (3) to the second party (2).

2. A method according to claim 1, wherein:
said document (5) is encrypted using an encryption algorithm with a symmetric encryption and decryption key;
the method further comprises the step of encrypting said symmetric key using an asymmetric encryption algorithm with a public encryption key and a private decryption key of the second party (2); and
said digital envelope (4) also comprises the encrypted symmetric key.

3. A method comprising any one of claims 1 or 2, which, after the transmission of the digitally signed envelope (4) to the third party (3), and before its transmission from the third party (3) to the second party (2); further comprises the steps of:
generating a digital digest of said digital envelope using a hash function;
generating a notification (28,33,34,35) comprising said digital digest of the envelope, and the digital digests (16,17) of the document, un-encrypted and encrypted;
digitally signing said notification (28,33,34,35) using a hash function and an asymmetric encryption algorithm with a private encryption key and a public decryption key of the third party (3);
electronically transmitting, from said third party (3) to said first party (1) and/or said second party (2), said digitally signed notification.

4. A method according to claim 3, wherein said notification is an acceptation or rejection receipt (34,35), and further comprising, after the second party receives said digitally signed acceptation or rejection receipt (34,35) from the third party (3), the steps of:
digitally countersigning said acceptation or rejection receipt (34,35) using a hash function and an asymmetric encryption algorithm with a private encryption key and a public decryption key of the second party (2);
electronically transmitting said signed acceptation or rejection receipt (34,35) from said second party (2) to said third party (3); and
verifying the signed acceptation or rejection receipt (34,35) before transmitting the envelope from the third party (3) to the second party (2).

5. A method according to claim 4, wherein said digitally signed acceptation or rejection receipt (34,35) is further transmitted from the third party (3) to the first party (1).

6. A method according to any one of claims 4 or 5, further comprising, after said signed acceptation or rejection receipt (34,35) is verified and before the digital envelope (4) is transmitted from the third party (3) to the second party (2), at least the steps of:
generating a confirmation notification (36,36') comprising said digital digest of the envelope (4), and the digital digests (16,17) of the document, un-encrypted and encrypted;
digitally signing said confirmation notification (36,36') using a hash function and an asymmetric encryption algorithm with a private encryption key and a public decryption key of the third party (3); and
electronically transmitting said confirmation notification (36,36') from the third party (3) to the first party (1) and/or the second party (2).

7. A method according to any one of the previous claims, further comprising, after the digital envelope (4) is transmitted from the third party (3) to the second party (2), at least the steps of:
generating a delivery receipt (37) comprising at least said digital digest of the envelope, and the digital digests (16,17) of the document, un-encrypted and encrypted;
digitally signing said delivery receipt (37) using a hash function and an asymmetric encryption algorithm with a private encryption key and a public decryption key of the third party (37); and
electronically transmitting said delivery receipt (37) from said third party (3) to said first party (1) and/or said second party (2).

8. A method according to any one of the previous claims, wherein said encrypted document is also digitally signed.

9. A method according to any one of the previous claims, wherein each digital signature is time stamped.

10. A method according to any one of the previous claims, wherein each digital signature also comprises a complete set of certification values and/or a complete set of revocation information values.

11. Digital envelope (4) comprising:
an encrypted document (5);
a digital digest (16) of said document (5), un-encrypted, generated using a hash function; and
a digital digest (17) of the encrypted document (5), generated using a hash function.
said symmetric encryption and decryption key, encrypted using an asymmetric encryption algorithm with a public encryption key and a private decryption key of a second party (2).

12. A digital envelope (4) according to claim 11, wherein:
said document (5) is encrypted using an encryption algorithm with a symmetric encryption and decryption key; and
said digital envelope (4) further comprises said symmetric encryption and decryption key, encrypted using an asymmetric encryption algorithm with a public encryption key and a private decryption key of a second party (2).

13. A digital envelope (4) according to any one of claims 11 or 12, wherein said digital envelope (4) also comprises an identifier of a first party (1) and/or the second party (2).

14. A digital envelope (4) according to any one of claims 11 to 13, wherein said encrypted document is digitally signed.

15. A digital envelope (4) according to any one of claims 11 to 14, wherein said digital envelope is digitally signed.

16. Digital notification or receipt (28,33,34,35,36,36',37) comprising:
a digital digest of a digital envelope (4) according to any one of claims 11 to 14; and
said digital digest (16) of the unencrypted document (5); and
said digital digest (17) of the encrypted document (5).

17. A digital notification or receipt (28,33,34,35,36,36',37) according to claim 16, wherein said notification or receipt (28,33,34,35,36,36',37) also comprises an identifier of a first party (1) and/or the second party (2).

18. A digital notification or receipt (28,33,34,35,36,36',37) according to any one of claims 16 or 17, wherein said notification or receipt is digitally signed.

19. Digital data storage medium comprising:
instructions for carrying out a method according to any one of claims 1 to 10;
a digital envelope (4) according to any one of claims 11 to 15;
and/or
a digital notification or receipt (28,33,34,35,36,36',37) according to any one of claims 16 to 18.
